# EUROPÄISCHE PATENTSCHRIFT

(11) **EP 3 257 707 B1**
(45) Veröffentlichungstag und Bekanntmachung des Hinweises auf die Patenterteilung: **30.12.2020**
(21) Anmeldenummer: 17168045.7
(22) Anmeldetag: 25.04.2017
(51) Int. Cl.: F21S 45/70, F21S 41/675, F21S 41/176

(54) **BELEUCHTUNGSVORRICHTUNG MIT SENSOR AM ABSORBER**
LIGHTING DEVICE WITH SENSOR AT THE ABSORBER
DISPOSITIF D'ÉCLAIRAGE COMPRENANT UN CAPTEUR SUR UN ABSORBEUR

(30) Priorität: 02.06.2016 DE 102016209648
(43) Veröffentlichungstag der Anmeldung: 20.12.2017
(73) Patentinhaber: OSRAM GmbH, 80807 München (DE)
(72) Erfinder: Schwaiger, Stephan, 89081 Ulm (DE); Schoemer, Ricarda, 86441 Zusmarshausen (DE); Hager, Jürgen, 89542 Herbrechtingen (DE); Hering, Oliver, 89168 Niederstotzingen (DE)
(74) Vertreter: OSRAM GmbH - GC IP

(56) Entgegenhaltungen:
- EP-A1- 2 767 751
- EP-A2- 1 433 655
- WO-A1-2015/000006
- WO-A1-2016/023133
- WO-A1-2016/082919
- JP-A- 2004 163 876
- US-A1- 2005 248 737
- US-A1- 2015 160 454

## Beschreibung

Die vorliegende Erfindung betrifft einen Farhzeugscheinwerfer mit einer Beleuchtungsvorrichtung mit einer Leuchteinrichtung einschließlich einer oder mehrerer Lichtquellen und einer Spiegeleinrichtung einschließlich eines schwenkbaren Spiegels oder Mikrospiegelarrays zum Lenken von Licht der einen oder mehreren Lichtquellen. Der Spiegel kann folgende Schwenkzustände einnehmen: Einen definierten ersten Schwenkzustand zum Lenken des Lichts in einen ersten Raumwinkelbereich, in dem eine betriebsgemäße Nutzung des Lichts erfolgt, einen definierten zweiten Schwenkzustand zum Lenken des Lichts in einen von dem ersten verschiedenen zweiten Raumwinkelbereich, in dem das Licht auf eine Absorbereinrichtung der Beleuchtungsvorrichtung gelenkt ist, und einen dritten Schwenkzustand zum Lenken des Lichts in einen zwischen dem ersten und zweiten Raumwinkelbereich liegenden dritten Raumwinkelbereich, wobei der dritten Schwenkzustand stets in einem stromlosen Zustand der Spiegeleinrichtung eingenommen ist. Darüber hinaus betrifft die vorliegende Erfindung ein Verfahren zum Überprüfen einer Funktionsfähigkeit einer derartigen Beleuchtungsvorrichtung.

Aktuell kommen immer mehr "neuartige" Scheinwerfersysteme in Fahrzeugen zur Realisierung. Dies betrifft insbesondere laserbasierte Systeme und Matrixsysteme. Beide leiden an gewissen Schwächen.

Bei laserbasierten Systemen wird Laserlicht mittels eines Konverters in sichtbares Licht umgewandelt. Lasersysteme müssen "lasersicher" sein, d.h. die Lichtquellen sollten idealerweise inhärent sicher sein. Alternativ sollte ein Lasersystem über Sensorik so abgesichert sein, dass in einem Fehlerfall (im Normalfall sollte ebenso keine gefährliche Laserstrahlung austreten) schnell genug abgeschaltet werden kann, ohne dass jemand zu Schaden kommt. In diesem Fall müsste aber die Sensorik den kompletten Winkelraum des emittierten Lichts (bzw. der möglichen Emission von Licht) abdecken, damit sicher nirgendwo Laserstrahlung austreten kann. Dies ist jedoch bei aktuellen Systemen technisch nicht machbar und somit auch nicht realisiert.

Matrixsysteme weisen typischerweise mehrere "Pixel" (eigentlich in den bisherigen Realisierungen allermeist nur Spalten) auf. Um eine homogene und akzeptable Lichtverteilung zu gewährleisten, müssen solche Systeme, sofern sie aus mehreren Untersystemen bestehen, was in aller Regel auch der Fall ist, zueinander justiert werden. Diese Justage ist jedoch von vielen Parametern abhängig (z. B. Umgebungstemperatur), sodass diese im Betrieb schlechter werden bzw. sich verändern kann. Insbesondere bei hochauflösenden Systemen, welche eine Vielzahl (>20) von Spalten oder Zeilen mit Leucht-Pixeln verwenden, ist diese Justage kritisch und aufwendig. Es werden jedoch immer bessere Systeme, d.h. Systeme mit immer höherer Auflösung gewünscht.

Dokument WO 2015/089018 A1 beschreibt ein DMD-Beleuchtungssystem (Digital Micromirror Device) mit einer Vielzahl an Lichtquellen. Jede der Lichtquellen lenkt Licht auf das DMD-System und speziell auf eine entsprechende Position einer Matrix von Mikrospiegeln. Jede Lichtquelle ist so positioniert, dass das von der Matrix aus Mikrospiegeln reflektierte Licht aus dem System herausprojiziert wird. Eine Steuerschaltung ist mit den mehreren Lichtquellen und dem DMD-System derart gekoppelt, dass es die Position der Matrix an Mikrospiegeln steuern und darüber hinaus Steuersignale zum Ein- und Ausschalten jeder der mehreren Lichtquellen bereitstellen kann. Jeder der Spiegel des DMD-Systems kann zwei definierte Schwenkpositionen einnehmen. In einer ersten Schwenkposition (üblicher Betriebszustand) wird das Licht über eine Sekundäroptik nach außen gelenkt (Ein-Zustand). In einer zweiten Schwenkposition, die ebenfalls definiert ist, lenkt der Spiegel Licht der Lichtquelle auf einen Absorber (Aus-Position). Der Spiegel nimmt eine Zwischenstellung zwischen der ersten Schwenkposition und der zweiten Schwenkposition ein, wenn der Spiegel bzw. seine Mechanik nicht angesteuert bzw. bestromt wird.

Die JP 2004 163876 A offenbart einen DLP-Projektor und ein Betriebsverfahren eines DLP-Projektors.

Die WO 2015/000006 A1 offenbart einen Fahrzeugscheinwerfer mit zumindest einer Laserlichtquelle, deren Laserstrahl über einen schwenkbaren Mikrospiegel zu einer Leuchtfläche mit Lichtkonversionsphosphor gelenkt wird. Es ist ein Fotosensor zur Erfassung von Sekundärlicht bei vorbestimmtem **Auslenklagen** des Mikrospiegels vorgesehen. Weitere Fahrzeugscheinwerfer sind von der EP 1 433 655 A2 oder der WO 2016/023133 A1 bekannt.

Die Aufgabe der vorliegenden Erfindung besteht darin, einen Fahrzeugscheinwerfer mit einer Beleuchtungsvorrichtung bereitzustellen, bei dem die Funktionsfähigkeit zuverlässig überprüft werden kann

Erfindungsgemäß wird diese Aufgabe gelöst durch einen Fahrzeugscheinwerfer mit einer Beleuchtungsvorrichtung nach Anspruch 1. Vorteilhafte Weiterbildungen der Erfindung ergeben sich aus den Unteransprüchen.

Erfindungsgemäß wird demnach ein Fahrzeugscheinwerfer mit einer Beleuchtungsvorrichtung mit einer Leuchteinrichtung einschließlich einer oder mehrerer Lichtquellen bereitgestellt. Bei diesen Lichtquellen kann es sich beispielsweise um eine Leuchtdioden- oder eine Laserlichtquelle handeln. Bei einer Laserlichtquelle wird üblicherweise das Laserlicht durch einen Konverter in z. B. weißes Licht umgesetzt.

Eine Beleuchtungsvorrichtung kann beispielsweise für Raum- oder Anlagenbeleuchtungen sowie für Heim- und Kinoprojektoren verwendet werden. In der bevorzugten Anwendung wird die Beleuchtungsvorrichtung in einen Autoscheinwerfer eingesetzt. Dabei kann sie nicht nur Abblend- und Fernlichtfunktionen sondern auch andere Lichtfunktionen wie beispielsweise zur Signalisierung oder auch für Effekt- und Entertainment-Lichtfunktionen übernehmen.

Die Beleuchtungsvorrichtung besitzt außerdem eine Spiegeleinrichtung einschließlich eines schwenkbaren Spiegels zum Lenken von Licht der einen oder mehreren Lichtquellen. Die Spiegeleinrichtung kann natürlich auch mehrere derartige Spiegel aufweisen (z.B. ein Mikrospiegelarray). Der oder die Spiegel lenken das Licht bei einem definierten ersten Schwenkzustand in einen ersten Raumwinkelbereich, in dem eine betriebsgemäße Nutzung des Lichts erfolgt, bei einem definierten zweiten Schwenkzustand in einen von dem ersten verschiedenen Raumwinkelbereich, in dem das Licht auf eine Absorbereinrichtung der Beleuchtungseinrichtung gelenkt ist, und optional bei einem dritten Schwenkzustand in einen zwischen dem ersten und zweiten Raumwinkelbereich liegenden dritten Raumwinkelbereich, wobei der dritte Schwenkzustand stets in einem stromlosen Zustand der Spiegeleinrichtung eingenommen ist. Dies bedeutet, dass sich der Spiegel in dem ersten Schwenkzustand in einem Ein-Zustand befindet, in dem er das Licht zu Nutzzwecken in gewünschter Weise nach außen lenkt. Demgegenüber befindet sich der Spiegel in dem zweiten Schwenkzustand in einem Aus-Zustand, in dem das Licht nicht für Beleuchtungszwecke nach außen gelenkt wird. Vielmehr wird es in dem zweiten Schwenkzustand in einem Absorber der Absorbereinrichtung absorbiert. Somit kann das Licht beispielsweise bei einem Fehler der Leuchteinrichtung oder falls dies bewusst gewünscht ist, in der Beleuchtungsvorrichtung gehalten werden, ohne beispielsweise Schaden anzurichten.

Besteht die Spiegeleinrichtung aus einer großen Anzahl von Spiegeln, kann eine hochaufgelöste Lichtverteilung erzeugt werden, indem jeder einzelne Spiegel gezielt in den Ein- oder Aus-Zustand gebracht wird. Werden die einzelnen Spiegel mit sehr hohen Schaltfrequenzen von bis zu mehreren tausend Statuswechseln pro Sekunde betrieben, können bei weißen Lichtquellen auch Graustufen erzeugt werden, bei farbigen Lichtquellen (in Kombination mit Farbrädern oder Shuttern) auch farbige hochaufgelöste Bilder.

Der dritte Schwenkzustand des Spiegels muss kein definierter Schwenkzustand sein. Vielmehr kann er ein Schwenkzustand sein, den der Spiegel einnimmt, wenn entsprechende Aktoren der Spiegeleinrichtung nicht bestromt sind. Dieser dritte Schwenkzustand kann beispielsweise durch eine mechanische Feder in einem gewissen Toleranzbereich eingehalten werden. Vorzugswese wird dieser dritte Schwenkzustand beispielsweise durch einen Rastzustand oder bei größtmöglicher mechanischer Entspannung einer Feder erreicht.

Erfindungsgemäß besitzt die Absorbereinrichtung einen Sensor, mit dem eine Funktionsfähigkeit der Beleuchtungsvorrichtung überprüfbar ist. Insbesondere kann der Sensor dazu ausgebildet sein, die Intensität von Licht gegebenenfalls sogar wellenlängenabhängig zu detektieren. Auf diese Weise kann das auf die Absorbereinrichtung bzw. deren Absorber fallende Licht analysiert werden. Falls beispielsweise der Konverter einer Laserlichtquelle defekt ist und ein zu hoher Anteil an unkonvertiertem Licht auf die Absorbereinrichtung bzw. den darin integrierten Sensor trifft, kann dies zum Anlass genommen werden, die Lichtquelle auszuschalten oder deren Leistung zu reduzieren. Das Signal des Sensors kann aber auch für andere Steuerungs- und Regelungszwecke sowie zur Speicherung und Darstellung entsprechender Informationen verwendet werden.
Der Sensor kann als Sensor-Array realisiert sein, welches segmentiert oder pixeliert ist, so dass verschiedene Funktionen auch gleichzeitig gemessen werden können.
In einer Variante ist das Sensorarray auf einem rotierenden Rad aufgebracht, das sich durch die OFF-Strahlung durchdreht und auf dem tangential und/oder auf benachbarten Spuren Sensorelemente für unterschiedliche Messfunktionen angeordnet sind. Eine Messfunktion (statisch oder dynamisch bei umlaufendem Rad) könnte auch durch ein umlaufendes Phosphorband (Leuchtstoff) mit Detektionssensor erfolgen, der die durch das (Fehler)Laserlicht bewirkte Leuchtstoff-(Gelb)-Konversion bzw. eine Überhöhung derselben misst.

Erfindungsgemäß besitzt die Spiegeleinrichtung eine Mikrospiegelanordnung mit einer Vielzahl an Spiegeln der genannten Art. Die Spiegeleinrichtung kann also ein eingangs erwähntes DMD enthalten. Ein derartiges DMD kann beispielsweise mehr als 20 bis zu mehreren Millionen Spiegeln aufweisen. Damit ist eine entsprechend hohe Anzahl an Pixel durch die Beleuchtungsvorrichtung realisierbar. Gegebenenfalls ist die Spiegeleinrichtung entsprechend hochauflösend.

Die Leuchteinrichtung kann mehrere Lichtquellen aufweisen, und die mehreren Lichtquellen können in Abhängigkeit von einem Signal des Sensors einzeln oder in Gruppen gesteuert, geregelt oder kalibrierbar sein. So kann die Funktion jeder Lichtquelle individuell in Abhängigkeit von einem Signal des Sensors beeinflusst werden. Beispielsweise kann die Funktionsfähigkeit der einzelnen Lichtquellen oder Gruppen davon nacheinander überprüft werden, indem die einzelnen Lichtquellen getrennt voneinander oder gruppenweise eingeschaltet und das jeweilige Sensorsignal beobachtet wird.

Jede der mehreren Lichtquellen kann von einer Steuereinrichtung der Beleuchtungsvorrichtung mit jeweils einer individuellen Modulation steuerbar sein. Eine Analyseeinrichtung der Beleuchtungsvorrichtung kann dann dazu ausgelegt sein, aus dem Signal des Sensors eine Information bezüglich einer Funktionsfähigkeit jeder einzelnen der mehreren Lichtquellen oder einer Gruppe der mehreren Lichtquellen insbesondere für die Steuereinrichtung zu gewinnen. Durch die unterschiedliche Modulation der einzelnen Lichtquellen oder der Gruppen kann deren Überprüfung gleichzeitig erfolgen. Das Sensorsignal ist dazu hinsichtlich der jeweiligen Modulationen zu analysieren. Wird so beispielsweise bei einer bestimmten Modulation ein zu hoher Blauanteil gemessen, so kann dies darauf hindeuten, dass ein Konverter der Lichtquelle mit dieser Modulation defekt ist und zu wenig blaues Licht in gelbes Licht wandelt.

Entsprechend einer vorteilhaften Weiterbildung ist in der Spiegeleinrichtung jeder Spiegel einzeln in den zweiten Schwenkzustand steuerbar. Dies bedeutet, dass jeder Spiegel unabhängig von den anderen Spiegeln in den Aus-Zustand versetzt werden kann, indem er das Licht auf die Absorbereinrichtung lenkt. So kann beispielsweise einer von mehreren Spiegeln dazu genutzt werden, das Licht auf die Absorbereinrichtung bzw. den darin integrierten Sensor zu richten, um damit die jeweilige Lichtquelle bzw. die Lichtquellen überprüfen zu können. Wird so beispielsweise ein Spiegel am Rand der Matrix nicht für Beleuchtungszwecke benutzt, so kann er für die Überprüfung der Funktionsfähigkeit der Beleuchtungsvorrichtung eingesetzt werden.

In besonders bevorzugter Ausgestaltung sind einer oder mehrere der Spiegel zum Überprüfen der Funktionsfähigkeit der Beleuchtungsvorrichtung zyklisch oder nach einem vorgegebenen Muster in den zweiten Schwenkzustand überführbar. Dies kann beispielsweise dadurch geschehen, dass der oder die Spiegel periodisch das Licht in die Absorbereinrichtung, die auch als Sensoreinrichtung eingerichtet sein kann, lenken, sodass die Funktionsfähigkeit der Beleuchtungsvorrichtung fortlaufend überprüft werden kann. So kann beispielsweise stets während des Betriebs der Beleuchtungsvorrichtung beispielsweise die geforderte Lasersicherheit eingehalten werden. Dabei kann die Absorbereinrichtung segmentiert oder pixeliert sein, so dass verschiedene Messungen sequentiell durchgeführt werden können (Farbe, Intensität, Taktung der Laserquellen, Polarisationsgrad der Strahlung, Abklingverhalten der Fluoreszenzstrahlung, etc.).

In einer speziellen Ausgestaltung können mehrere Spiegel der Mikrospiegelanordnung ein Muster bilden, und die Spiegeleinrichtung kann dazu ausgebildet sein, dass sämtliche Spiegel des Musters unabhängig von den übrigen Spiegeln der Mikrospiegelanordnung gleichzeitig in dem zweiten Schwenkzustand steuerbar sind. Es können also zur Überprüfung der Funktionsfähigkeit eine Vielzahl an Spiegeln, die miteinander ein vorgegebenes Muster bilden, jeweils in den zweiten Schwenkzustand, d.h. den Aus-Zustand, überführt werden. So können beispielsweise alle vier Eckspiegel einer rechteckigen Mikrospiegelanordnung gleichzeitig in den zweiten Schwenkzustand geschaltet werden. Es können aber auch beispielsweise während des Abblendbetriebs bei einem Kraftfahrzeug sämtliche oder ein Teil der Spiegel für die Fernlichtfunktion in den zweiten Schwenkzustand geschwenkt werden, damit mit ihnen die Funktionsfähigkeit der einen oder der mehreren Lichtquellen überprüft werden kann. Mit den Mustern kann nicht nur die Funktionsfähigkeit der Lichtquellen überprüft werden, sondern auch die Funktionsfähigkeit der Spiegeleinrichtung bzw. der einzelnen Spiegel. Wenn nämlich beispielsweise nacheinander die einzelnen Spiegel in den Aus-Zustand geschwenkt werden, beeinträchtigt dies unter Umständen nicht die gewünschte Beleuchtungsfunktion. Trotzdem können auf diese Weise nacheinander sämtliche Spiegel hinsichtlich ihrer Funktionsfähigkeit überprüft werden. Dabei haben die Muster den Vorteil, dass nicht sämtliche Spiegel einzeln überprüft werden müssen.

Gegebenenfalls ist mit dem Sensor eine optische Leistung, ein Farbort des Lichts oder eine Wellenlängenverteilung erfassbar. Anhand der optischen Leistung kann insbesondere die Lichtquelle selbst überprüft werden. Mit dem Farbort des Lichts und der Wellenlängenverteilung lässt sich eher beispielsweise ein Konverter der Leuchteinrichtung überprüfen. Ist der nämlich beispielsweise durch Überhitzung beschädigt oder befindet er sich aufgrund zu hoher Leistung des Lasers über seiner eigenen Leistungsgrenze, so verändert sich die Konversionsrate und damit in der Regel auch die Wellenlängenverteilung des den Konverter verlassenden Lichts. Dies äußert sich in einer spektralen Verschiebung und mithin in einer Veränderung des Farborts.

Erfindungsgemäß sind von der Spiegeleinrichtung in Abhängigkeit von einem Signal des Sensors einer oder mehrere der Spiegel "dauerhaft" (d.h. für einen vorgebbaren Zeitraum oder bis zu einem vorgebaren Ereignis) oder in vorgegebenen Intervallen in den zweiten Schwenkzustand steuerbar. Dies bedeutet, dass eines oder mehrere Pixel auf Dauer ausgeschaltet werden. Notwendig kann dies sein, wenn z.B. das Leuchtstoffplättchen lokale Defekte aufweist oder der betreffende bzw. die betreffenden Spiegel beschädigt sind. Wenn beispielsweise die Lichtquelle oder ein Großteil des Konverters beschädigt sind, sollte entweder die Lichtquelle ausgeschalten werden oder sämtliche Spiegel in den Aus-Zustand geschalten werden. Alternativ kann in einen wählbaren Intermittenzbetrieb geschaltet werden, bei welchem das Verhältnis von EIN/AUS eines Mikro-Spiegels von 1:10, 1:1000, 1:10000, 1:100000, 1: 1000000, etc. einstellbar ist. Dadurch wird noch eine gewisse Grundfunktion aufrecht erhalten, aber das Gefährdungspotential ist durch den Intermittenzbetrieb deutlich reduziert (und kann z.B. für Notlichtfunktionen verwendet werden).

Die vorliegende Erfindung wird nun anhand der beigefügten Zeichnungen näher erläutert, in denen zeigen:
- Fig. 1: eine schematische Ansicht einer Beleuchtungsvorrichtung gemäß der vorliegenden Erfindung mit verschiedenen Zuständen; und
- Fig. 2: ein schematisches Ablaufdiagramm eines Verfahrens.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Kombinationen realisiert werden können.

Eine Beleuchtungsvorrichtung, wie sie nachfolgend beschrieben ist, wird in einem Kraftfahrzeugscheinwerfer für eine Abblendfunktion, eine Fernlichtfunktion verwendet werden.

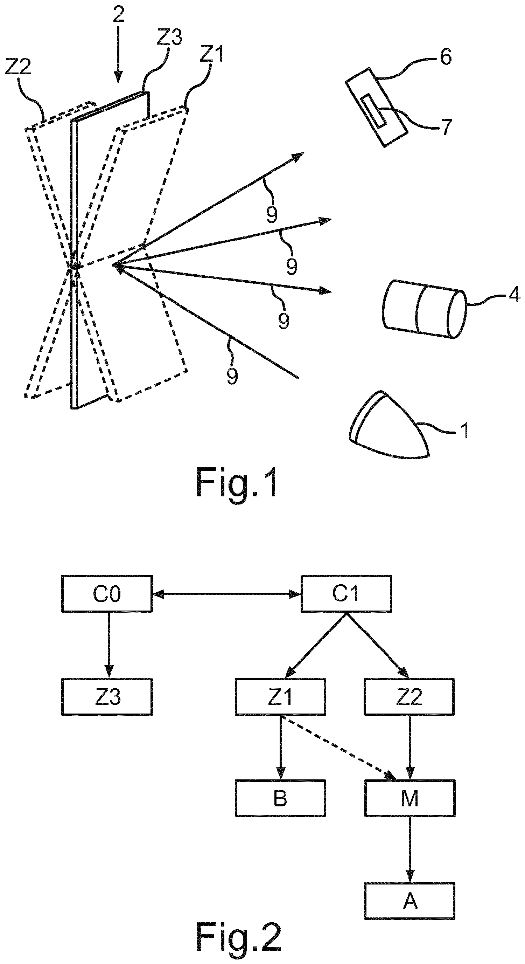

Das in Fig. 1 dargestellte Beispiel einer erfindungsgemäßen Beleuchtungsvorrichtung besitzt eine Leuchteinrichtung 1. Eine solche Leuchteinrichtung 1 kann eine oder mehrere Lichtquellen enthalten. Als Lichtquelle kann beispielsweise ein Lasersystem, ein Leuchtdiodensystem oder dergleichen dienen. Die eine oder mehreren Lichtquellen der Leuchteinrichtung 1 werden von einer in Fig. 1 nicht dargestellten Steuereinrichtung gesteuert bzw. betrieben.

Die Beleuchtungsvorrichtung besitzt ferner eine Spiegeleinrichtung mit einem oder mehreren Spiegeln 2. Jeder Spiegel 2 wird von jeweils einem Aktor (nicht dargestellt) angetrieben, sodass er eine Schwenkbewegung um seine Mittelachse parallel zu seiner Spiegelfläche durchführen kann. Der bzw. die Aktoren werden wiederum von einer Steuereinrichtung angesteuert, die separat ausgebildet oder zusammen mit der Steuereinrichtung der Leuchteinrichtung als eine Einheit ausgeführt sein kann. Bewegt durch einen Aktor kann der Spiegel 2 einen definierten ersten Zustand Z1 einnehmen. In diesem Zustand wird das Licht der Leuchteinrichtung auf eine optional vorhandene Sekundäroptik 4 gelenkt. Dort wird sie optisch für den jeweiligen Nutzen aufbereitet, z. B. fokussiert.

Der Spiegel 2 kann einen definierten zweiten Schwenkzustand Z2 einnehmen. In diesem Schwenkzustand lenkt der Spiegel 2 das Licht der Leuchteinrichtung 1 auf eine Absorbereinrinchtung 6. Von dieser Absorbereinrichtung 6 wird das von der Leuchteinrichtung 1 produzierte Licht absorbiert, d.h. vernichtet. In dem zweiten Schwenkzustand des Spiegels 2 soll also kein Licht nach außen aus der Beleuchtungsvorrichtung treten.

Die Absorbereinrichtung 6 weist neben dem eigentlichen Absorber einen Sensor 7 auf. Dieser Sensor 7, der segmentiert oder pixeliert sein kann, erfasst zumindest einen Teil des Lichts, das durch den Spiegel 2 im zweiten Schwenkzustand Z2 auf die Absorbereinrichtung 6 gerichtet wird. Ein entsprechendes Sensorsignal wird ausgewertet und kann Aufschluss geben über die Funktionsfähigkeit der Beleuchtungseinrichtung und insbesondere über die Funktionsfähigkeit der Leuchteinrichtung 1 und/oder der Spiegeleinrichtung mit dem Spiegel 2.

Der Spiegel 2 kann einen dritten Zustand Z3 annehmen, wenn beispielsweise sein Aktor bzw. die Steuereinrichtung der Spiegeleinrichtung nicht bestromt wird. Bei diesem dritten Schwenkzustand kann es sich um diejenige Schwenkposition handeln, die der Spiegel 2 beispielsweise aufgrund einer entsprechend verbauten Feder einnimmt. Während der dritte Schwenkzustand Z3 beispielsweise eine Zwischen- bzw. Mittelstellung des Spiegels 2 repräsentiert, repräsentieren der erste Schwenkzustand Z1 und der zweite Schwenkzustand Z2 beispielsweise jeweilige Extremstellungen hinsichtlich der Verschwenkbarkeit des Spiegels 2. Beispielsweise zieht ein Elektromagnet den Spiegel 2 bei einer vorgegebenen Polung auf Anschlag in den ersten Schwenkzustand Z1. Bei Umpolung schiebt bzw. zieht der Elektromagnet den Spiegel 2 auf Anschlag in den zweiten Schwenkzustand Z2. Der dritte Schwenkzustand Z3 ist mehr oder weniger undefiniert und liegt zwischen den beiden anderen definierten Schwenkzuständen Z1 und Z2. Gegebenenfalls ist er durch eine Feder oder Rasterung mechanisch definiert.

Im Zusammenhang mit Fig. 2 wird nun ein Beispiel eines Verfahrens angedeutet. Hierzu wird vorzugsweise eine Beleuchtungsvorrichtung gemäß Fig. 1 verwendet. Es wird davon ausgegangen, dass die Leuchteinrichtung 1 leuchtet. Wird in einem Aus-Zustand C0 der Spiegel 2 nicht angesteuert, so befindet er sich in dem dritten Schwenkzustand Z3 oder er wird dorthin mechanisch bewegt.

Wird die Steuereinrichtung des Spiegels eingeschaltet und geht damit vom Aus-Zustand C0 in den Ein-Zustand C1 so wird der Spiegel vorzugsweise elektrisch angesteuert. Je nach gewünschter Stellung nimmt er den ersten Schwenkzustand Z1 oder den zweiten Schwenkzustand Z2 ein. In dem ersten Schwenkzustand Z1 führt die Beleuchtungsvorrichtung eine Beleuchtungsfunktion B aus. Wird der Spiegel hingegen in den zweiten definierten Schwenkzustand Z2 gesteuert, so führt die Beleuchtungsvorrichtung eine Messfunktion M aus. Dabei erfasst der Sensor 7 das Licht, das auf die Absorbereinrichtung 6 fällt. Dies schließt jedoch nicht aus, dass der Sensor 7 auch in dem ersten Schwenkzustand Z1 auch Lichtstrahlung (Fehlerlicht) erfasst und die Beleuchtungsvorrichtung damit ebenfalls die Messfunktion M ausführt (vergleiche gestrichelter Pfeil). Die Messfunktion M ist gekoppelt mit einer Auswertefunktion A. Dabei wird ausgewertet, ob das erfasste Licht z. B. in Intensität, Wellenlänge und dergleichen den Nennvorgaben für die Beleuchtungsvorrichtung entspricht. Falls dem nicht so ist, kann eine entsprechende Fehlermeldung ausgegeben werden. Mit dem resultierenden Auswertesignal kann aber auch die Steuerung der Leuchteinrichtung bzw. der Spiegeleinrichtung beeinflusst werden. Insbesondere kann damit eine Steuerung oder eine Regelung dieser Komponenten realisiert werden.

Nachfolgend werden konkretere Anwendungen in detaillierten Beispielen dargestellt. So wird beispielsweise ein DLPbasiertes System (Digital Light Processing), welches in der Regel ein DMD (Digital Micromirror Device) besitzt, vorgeschlagen. Dieses DLP-System kann im sogenannten "Beam Dump", d.h. in oder an dem Absorber einen gegebenenfalls segmentierten oder pixelierten (Flächen-)Sensor besitzen. Das Licht der Leuchteinrichtung 1 trifft auf ein Spiegelarray (DMD), welches aus vielen kleinen Spiegel (ggf. mehrere Millionen) besteht, welche individuell angesteuert und geklappt werden können. Der Spiegel 2 von Fig. 1 repräsentiert beispielsweise einen dieser Spiegel.

Die einzelnen Spiegel werden entweder so gestellt, dass Licht in der Sekundäroptik 4 weiterverarbeitet werden kann ("On State Energy") oder aber auf den Absorber bzw. die Absorbereinrichtung 6 ("Off State Energy") fällt und nicht mehr aktiv verwendet wird. Dazu nehmen die jeweiligen Spiegel des DMD abhängig oder unabhängig voneinander den ersten Schwenkzustand Z1 oder den zweiten Schwenkzustand Z2 ein. Der dritte Schwenkzustand Z3 ("Flat State") kann nicht aktiv angesteuert werden und liegt gewissermaßen undefiniert ("floating") im ausgeschalteten Zustand der Steuereinrichtung bzw. der Spiegeleinrichtung vor.

Aufgrund der großen Anzahl an Spiegelchen bzw. Pixeln kann ein hochauflösendes Bild erzeugt werden, da das Licht jedes einzelnen Spiegels entweder verwendet oder "vernichtet" (d.h. dunkel in Bezug auf die Sekundäroptik 4, d.h. Beam Dump Nutzung) wird bzw. werden kann. Die DMD-Spiegelchen können beispielsweise mit sehr hohen Schaltfrequenzen von bis zu mehreren tausend Statuswechseln pro Sekunde betrieben werden. In Verbindung mit einer intelligenten Ansteuerung sind so auch Zwischenstufen (Grautöne) möglich bzw. mit farbigen Lichtquellen (gegebenenfalls auch mit Farbrädern oder Shuttern) auch jegliche Farbinformationen. Auf diese Weise können insbesondere Heim- und Kinoprojektoren realisiert werden.

Die Leuchteinrichtung 1, mit der das DMD bzw. die DLP-Spiegel beleuchtet werden, kann ein komplexes Modul aus einer oder mehreren Lichtquellen wie z. B. LARP, Laser, LED etc. sein und Konversionselemente, sowie eine anspruchsvolle primäre Optik beinhalten. Die Primäroptik wiederum kann z. B. einen Beam Combiner für die verschiedenen Lichtquellen sowie diverse optische Elemente zur Lichtformung beinhalten, die das Licht auf den DMD werfen.

Erfindungsgemäß weist die Absorbereinrichtung neben einem eigentlichen Absorber einen Sensor auf. Dies bedeutet, dass der Sensor in oder an dem Absorber angeordnet sein kann. Dies hat zahlreiche Vorteile, was folgende Betrachtungen zeigen.

Bei einer sogenannten LARP-Anordnung (Laser Activated Remote Phosphor) wird Laserlicht zumindest teilweise über einen Konverter in (ungefährliches, da nahezu inkohärentes) Licht umgewandelt und direkt zur Beleuchtung verwendet. Ein Defekt dieses Konverters hätte Laserstrahlung zur Folge. Da die gesamte Lichtmenge, welche im "On State" (erster Schwenkzustand Z1) für die Applikation genutzt wird im "Off State" (zweiter Schwenkzustand Z2) auf die Absorbereinrichtung bzw. den Sensor 7 fällt, kann ein solcher die "Lasersicherheit" gewährleisten.

Bei detektierten Unregelmäßigkeiten bzw. Abweichungen können einzelne oder alle Laserlichtquellen der Leuchteinrichtung 1 ganz oder auch nur teilweise abgeschaltet werden. Detektiert der Sensor 7 nur in einem Teilbereich des DMDs eine Unregelmäßigkeit in der Beleuchtung, kann eine Teilabschaltung der betroffenen Pixel erfolgen, was in einer Teilabschaltung für nur die betroffenen Bereiche der Lichtverteilung beispielsweise im Fernfeld eines Kraftfahrzeugscheinwerfers resultiert, da die Sekundäroptik 4 eine Abbildung des DMDs ins Fernfeld durchführt. Denkbar ist z. B. auch, dass eine eventuelle Grundlichtfunktion mit Lichtquellen realisiert wird, die nicht den sicherheitstechnischen Themen der LARP-Technologie unterliegen und so im Notfall immer genutzt werden können.

Wird in einer LARP-Anordnung die Lichtverteilung auf dem Konversionselement direkt auf den DMD abgebildet, besteht die Möglichkeit, absichtlich einen oder mehrere Spiegel auf "Off", d.h. Schwenkzustand Z2, zu stellen und somit einen gewissen Bereich z. B. des Konverters auf Fehlerfreiheit hin zu untersuchen (gezielte Detektion). Dies kann sowohl immer ein oder derselbe Mikrospiegel (oder eine Gruppe von Mikrospiegeln, deren Muster und Form an die Applikation angepasst sein kann) sein. Wenn beispielsweise der Konverter nur bestimmte, bekannte Defektzustände annehmen kann, sollten nur die betroffenen Pixel untersucht werden. Günstig ist es auch, wenn für die gezielte Detektion nur diejenigen Pixel bzw. Mikrospiegel verwendet werden, die nicht für die Beleuchtungsfunktion genutzt werden können/sollen. Darüber hinaus besteht auch die Möglichkeit, immer abwechselnd oder in bestimmten Mustern oder alle Spiegel durchlaufend die Detektion durchzuführen.

Der Sensor 7 kann beispielsweise die optische Leistung, die Wellenlängenverteilung oder den Farbort des Lichts messen, das beispielsweise in den Konus des "Off State" fällt. Daraufhin erfolgt ein Abgleich zwischen dem gemessenen und dem erwarteten Wert, der in der Software hinterlegt sein kann. Ist die Abweichung zu groß, so kann dies z.B. als Fehler auf dem Konversionselement gewertet werden. Als Reaktion darauf gibt es verschiedene Möglichkeiten: Entweder müssen sich von da an die betroffenen Pixel im "Off State" (zweiter Schwenkzustand Z2 der Mikrospiegel) befinden und/oder es können einzelne Laserquellen so nachgeregelt werden (z. B. Dimmung bei einem Überrollen auf dem Konversionselement), dass die Messwerte im Sensor wieder im Normalbereich liegen. Dies bedeutet, dass die Leistung des Lasers dann soweit reduziert ist, dass das Konversionselement die Eingangsstrahlung auch im vorgesehenen Maß konvertieren kann. Bei den Fehlern ist in der Regel auch zu unterscheiden, ob alle Pixel, die von einer Lichtquelle beleuchtet werden, das gleiche Fehlerbild zeigen. Dann ist die Ursache wohl in der Lichtquelle zu suchen. Zeigen nur einzelne Pixel eine Abweichung (z.B. im Peak der Lichtverteilung), so liegt vermutlich ein lokaler Defekt des Konversionsplättchens vor.

Hat das Konversionselement einen permanenten Defekt, können je nach Auslegung der Primäroptik eventuell auch einzelne Laserlichtquellen ausgeschaltet werden, sodass die fehlerhafte Region des Konversionselements nicht mehr mit Licht beaufschlagt wird und der Energieverbrauch minimiert wird. Zudem ist es möglich, dass nach erfolgter Detektion eines Fehlers auf dem Konversionselement eine Fehlermeldung beispielsweise für den Fahrer (z. B. Aufleuchten eines Symbols am Armaturenbrett) oder die Werkstatt ausgegeben wird.

Das detektierte Signal muss nicht zwangsweise nur zur Fehlerdetektion verwendet werden. Ebenso ist eine Prüfung und/oder Kalibrierung der (optischen) Leistung in verschiedenen Bereichen der Lichtverteilung möglich. Soll z. B. die Intensität in den Randbereichen exakt die Hälfte des Maximums im Zentrum sein, so kann die theoretisch anliegende Leistung praktisch gemessen und nachgestellt werden. Insbesondere kann so die Leistung oder Intensität ortsabhängig, also für jedes Pixel einzeln, eingestellt, gesteuert oder geregelt werden.

Eine solche Kalibrierung ist insbesondere von Interesse, wenn mehrere Lichtquellen zur Beleuchtung beitragen, wie z. B. mehrere LEDs (oder Laserquellen oder auch Hybridsysteme bestehend aus LED und LARP). Hier kann dann beispielsweise jede Lichtquelle für sich in jedem Pixel detektiert und kalibriert werden.

Eine Kalibrierung kann sowohl relativ als auch absolut erfolgen. Bei relativer Kalibrierung werden beispielsweise verschiedene Lichtquellen zueinander und/oder einzelne Pixel bzw. Spiegel zueinander kalibriert. Bei absoluter Kalibrierung erfolgt hingegen ein Abgleich auf absolute Kalibrierung.

Eine Kalibrierung oder eine Detektion kann sowohl einmalig (z. B. beim Einschalten oder Umschalten zu einer bestimmten Lichtfunktion) durchgeführt werden als auch mehrmalig, periodisch oder kontinuierlich. Auf diese Weise ist auch eine Nachführung des Systems möglich, falls ein solches z. B. bei höheren Temperaturen oder über die Lebensdauer hinweg einer Drift ausgesetzt ist.

Die Dauer und/oder Frequenz (z. B. PWM) solcher Mess- oder Überprüfungsintervalle kann für die einzelnen Spiegel und/oder Lichtquellen gleich oder unterschiedlich sein. Hierdurch können die Spiegel bzw. Lichtquellen unterschieden werden.

Weiterhin können dem Sensor beispielweise zur Erhöhung der Sensitivität bzw. des Dynamikumfangs (z. B. wechselbare) Filter vorgeschaltet sein. Dabei kann es sich nicht nur um Graufilter handeln, die die Intensität breitbandig herabsetzen, sondern auch um Farbfilter, die das Spektrum partiell herabsetzen.

### BEZUGSZEICHENLISTE

- 1: Leuchteinrichtung
- 2: Spiegel
- 4: Sekundäroptik
- 6: Absorbereinrichtung
- 7: Sensor
- 9: Strahlen
- A: Auswertefunktion
- B: Beleuchtungsfunktion
- C0: Aus-Zustand
- C1: Ein-Zustand
- M: Messfunktion
- Z1: erster Schwenkzustand
- Z2: zweiter Schwenkzustand
- Z3: dritter Schwenkzustand

## Patentansprüche

1. Fahrzeugscheinwerfer mit einer Beleuchtungsvorrichtung mit
- einer Leuchteinrichtung (1) einschließlich mindestens LARP-Lichtquelle,
- einer Spiegeleinrichtung, die eine Mikrospiegelanordnung mit einer Vielzahl an schwenkbaren Spiegeln (2) aufweist, zum Lenken von Licht der einen oder mehreren Lichtquellen bei
∘ einem definierten ersten Schwenkzustand (Z1) in einen ersten Raumwinkelbereich, in dem eine betriebsgemäße Nutzung des Lichts erfolgt, und
∘ einem definierten zweiten Schwenkzustand (Z2) in einen von dem ersten verschiedenen zweiten Raumwinkelbereich, in dem das Licht auf eine Absorbereinrichtung (6) der Beleuchtungsvorrichtung gelenkt ist, wobei
die Absorbereinrichtung (6) einen Sensor (7) aufweist, mit dem eine Funktionsfähigkeit der Beleuchtungsvorrichtung überprüfbar ist,
**dadurch gekennzeichnet, dass** im Falle eines erkannten Fehlers der Beleuchtungsvorrichtung von der Spiegeleinrichtung in Abhängigkeit von einem Signal des Sensors (7) einer oder mehrere der Spiegel (2) dauerhaft oder in vorgegebenen Intervallen in den zweiten Schwenkzustand (Z2) steuerbar sind, sodass eine Grundfunktion des Fahrzeugscheinwerfers aufrechterhalten bleibt.

2. Fahrzeugscheinwerfer nach Anspruch 1, wobei die Leuchteinrichtung (1) mehrere Lichtquellen aufweist, und die mehreren Lichtquellen in Abhängigkeit von einem Signal des Sensors (7) einzeln oder in Gruppen gesteuert, geregelt oder kalibrierbar sind.

3. Fahrzeugscheinwerfer nach Anspruch 2, wobei jede der mehreren Lichtquellen von einer Steuereinrichtung der Beleuchtungsvorrichtung mit jeweils einer individuellen Modulation steuerbar ist, und eine Analyseeinrichtung der Beleuchtungsvorrichtung dazu ausgelegt ist, aus dem Signal des Sensors (7) eine Information bezüglich einer Funktionsfähigkeit jeder einzelnen der mehreren Lichtquellen oder einer Gruppe der mehreren Lichtquellen insbesondere für die Steuereinrichtung zu gewinnen.

4. Fahrzeugscheinwerfer nach einem der Ansprüche 1 bis 3, wobei in der Spiegeleinrichtung jeder Spiegel (2) einzeln in den zweiten Schwenkzustand (Z2) steuerbar ist.

5. Fahrzeugscheinwerfer nach Anspruch 4, wobei einer oder mehrere der Spiegel (2) zum Überprüfen der Funktionsfähigkeit der Beleuchtungsvorrichtung zyklisch oder nach einem vorgegebenen Muster in den zweiten Schwenkzustand (Z2) überführbar sind.

6. Fahrzeugscheinwerfer nach Anspruch 4 oder 5, wobei mehrere Spiegel (2) der Mikrospiegelanordnung ein Muster bilden und die Spiegeleinrichtung dazu ausgebildet ist, dass sämtliche Spiegel des Musters unabhängig von den übrigen Spiegeln der Mikrospiegelanordnung gleichzeitig in den zweiten Schwenkzustand (Z2) steuerbar sind.

7. Fahrzeugscheinwerfer nach einem der vorhergehenden Ansprüche, wobei mit dem Sensor (7) eine optische Leistung, ein Farbort des Lichts oder eine Wellenlängenverteilung erfassbar ist.

8. Fahrzeugscheinwerfer nach einem der vorhergehenden Ansprüche, wobei der schwenkbare Spiegel (2) ausgebildet ist zum Lenken von Licht der einen oder mehreren Lichtquellen bei einem dritten Schwenkzustand (Z3) in einen zwischen dem ersten und zweiten Raumwinkelbereich liegenden dritten Raumwinkelbereich, wobei der dritte Schwenkzustand (Z3) stets in einem stromlosen Zustand der Spiegeleinrichtung eingenommen ist.

## Claims

1. Vehicle headlamp having an illumination apparatus having
- a light-emitting device (1) including at least one LARP light source,
- a mirror device including a micromirror arrangement having a multiplicity of pivotable mirrors (2) for directing light from the one or more light sources in
∘ a defined first pivot state (Z1) into a first solid angle region in which the light is utilized in accordance with proper operation, and
∘ a defined second pivot state (Z2) into a second solid angle range that differs from the first one and in which the light is directed onto an absorber device (6) of the illumination apparatus, wherein
the absorber device (6) has a sensor (7) with which a function of the illumination apparatus may be checked,
**characterized in that**, if a defect of the illumination apparatus is detected, one or more of the mirrors (2) are controllable into the second pivot state (Z2) permanently or in specific intervals by the mirror device in dependence on a signal of the sensor (7) such that a basic function of the vehicle headlamp is maintained.

2. Vehicle headlamp according to Claim 1, wherein the light-emitting device (1) has a plurality of light sources, and the plurality of light sources, individually or in groups, can be controlled by open-loop control or closed-loop control or may be calibrated in dependence on a signal of the sensor (7).

3. Vehicle headlamp according to Claim 2, wherein each of the plurality of light sources is controllable by a control device of the illumination apparatus with in each case individual modulation, and an analysis device of the illumination apparatus is designed to obtain, from the signal of the sensor (7), information relating to a function of each individual one of the plurality of light sources or a group of the plurality of light sources in particular for the control device.

4. Vehicle headlamp according to one of Claims 1 to 3, wherein each mirror (2) in the mirror device is individually controllable into the second pivot state (Z2).

5. Vehicle headlamp according to Claim 4, wherein one or more of the mirrors (2) are movable into the second pivot state (Z2) cyclically or according to a specified pattern for checking the function of the illumination apparatus.

6. Vehicle headlamp according to Claim 4 or 5, wherein a plurality of mirrors (2) of the micromirror arrangement form a pattern and the mirror device is configured such that all the mirrors of the pattern are controllable into the second pivot state (Z2) at the same time independently of the remaining mirrors of the micromirror arrangement.

7. Vehicle headlamp according to one of the preceding Claims, wherein an optical output, a colour point of the light or a wavelength distribution is capturable with the sensor (7).

8. Vehicle headlamp according to one of the preceding claims, wherein the pivotable mirror (2) is configured for directing light from the one or more light sources in a third pivot state (Z3) into a third solid angle region located between the first and second solid angle regions, wherein the third pivot state (Z3) is always adopted if the mirror device is in an unpowered state.

## Revendications

1. Phare, comportant un dispositif d'éclairage comprenant
- une lampe (1) comportant au moins une source lumineuse LARP,
- un moyen formant miroir comprenant un agencement de micromiroirs comportant une multitude de miroirs (2) pivotants pour diriger de la lumière de l'une ou des plusieurs sources lumineuses, face à
∘ un premier état de pivotement (Z1) défini, vers une première zone d'angles solides dans laquelle se fait une utilisation conforme à l'exploitation, et
∘ un deuxième état de pivotement (Z2) défini vers une deuxième zone d'angles solides différente de la première, dans lequel la lumière est dirigée sur un moyen absorbeur (6) du dispositif d'éclairage,
le moyen absorbeur (6) comportant un capteur (7) permettant le contrôle fonctionnel du dispositif d'éclairage, **caractérisé en ce qu'**en cas d'une erreur constatée du dispositif d'éclairage, le moyen formant miroir permet, en fonction d'un signal émis par le capteur (7), de commander un ou plusieurs des miroirs (2) de manière à passer dans le deuxième état de pivotement (Z2), en permanence ou en intervalles définis, de manière qu'une fonction de base du phare soit maintenue.

2. Phare selon la revendication 1, dans lequel la lampe (1) comporte plusieurs sources lumineuses et les plusieurs sources lumineuses sont susceptibles d'être commandées, réglées ou calibrées individuellement ou par groupes en fonction d'un signal du capteur (7).

3. Phare selon la revendication 2, dans lequel chacune des plusieurs sources lumineuses est susceptible d'être commandée par un dispositif de commande du dispositif d'éclairage grâce à une modulation individuelle chacune, un dispositif d'analyse du dispositif d'éclairage étant conçu pour extraire du signal du capteur (7) une information relative à une fonctionnalité de chacune des nombreuses sources lumineuses ou d'un groupe des nombreuses sources lumineuses notamment pour le dispositif de commande.

4. Phare selon l'une des revendications 1 à 3, dans lequel dans le moyen formant miroir, chaque miroir (2) est susceptible d'être commandé individuellement pour passer dans le deuxième état de pivotement (Z2).

5. Phare selon la revendication 4, dans lequel, pour le contrôle de la fonctionnalité du dispositif d'éclairage, un ou plusieurs des miroirs (2) peut/peuvent être commandé/s de manière à passer dans le deuxième état de pivotement (Z2) cycliquement ou selon un modèle défini.

6. Phare selon la revendication 4 ou 5, dans lequel plusieurs miroirs (2) de l'agencement de micromiroirs forment un motif, le moyen formant miroir étant conçu pour permettre à la totalité des miroirs du motif d'être commandée simultanément pour passer dans le deuxième état de pivotement (Z2), indépendamment des autres miroirs de l'agencement de micromiroirs.

7. Phare selon l'une des revendications précédentes, dans lequel le capteur (7) permet de détecter une puissance optique, un lieu de couleur ou une répartition de longueurs d'ondes.

8. Phare selon l'une des revendications précédentes, dans lequel le miroir pivotant (2) est conçu pour diriger de la lumière de l'une ou des plusieurs sources lumineuses face à un troisième état de pivotement (Z3) vers une troisième zone d'angles solides située entre les première et deuxième zones d'angles solides, le troisième état de pivotement (Z3) étant occupé toujours dans un état hors circuit du moyen formant miroir.
